# EUROPEAN PATENT SPECIFICATION

(11) **EP 2 027 179 B1**
(45) Date of publication and mention of the grant of the patent: **21.09.2011**
(21) Application number: 07760817.2
(22) Date of filing: 18.04.2007
(51) Int. Cl.: C08G 64/06, C08G 64/20, C08K 5/1535, C08L 69/00

(54) **METHOD OF STABILIZATION OF DIHYDRIC PHENOLS**
VERFAHREN ZUR STABILISIERUNG ZWEIWERTIGER PHENOLE
PROCÉDÉ DE STABILISATION DE PHÉNOLS DIHYDRIQUES

(30) Priority: 12.06.2006 US 423526
(43) Date of publication of application: 25.02.2009
(73) Proprietor: SABIC Innovative Plastics IP B.V., 4612 PX Bergen op Zoom (NL)
(72) Inventor: ASHTEKAR, Sunil, Kundalahalli, Bangalore 560 037 (IN); KAMPS, Jan, Henk, 4623 VR Bergen op Zoom (NL); LENS, Jan, Pleun, 4815 ED Breda (NL); NADKARNI, Pradeep, Bangalore, Karnataka 560 093 (IN); THAMPI, Jegadeesh, Bangalore 560 017 (IN)
(74) Representative: Modiano, Micaela Nadia
(86) International application number: PCT/US2007/066842
(87) International publication number: WO 2007/146487

(56) References cited:
- EP-A2- 0 520 804
- US-A- 5 405 933
- US-A1- 2002 173 566
- US-A1- 2005 261 460

## Description

This disclosure generally relates to the stabilization of dihydric phenols. More particularly the disclosure relates to stabilizing the dihydric phenols, under the conditions prevailing in a polymerization reaction.

Polycarbonates are ranked among the most important of the world's engineering thermoplastics. Bisphenol A polycarbonate is currently the most widely used polycarbonate and its world wide annual production exceeds one billion pounds. Polycarbonates are used in hundreds of applications such as eyeglass lenses and optical media, where their transparency and tough physical properties are beneficial. Some dihydric phenols, for example methyl hydroquinone, are key monomers for preparing polycarbonates that are used in specialty applications, such as, for example, in packaging for cosmetic, perfume, or biochemical applications. In addition to being chemically resistant and transparent, the polycarbonates also need to have improved color (i.e., reduced yellowness index).

However, some dihydric phenols, such as, for example, hydroquinone and methyl hydroquinone, acquire color under oxygen, heat or storage, either due to oxidation and/or due to thermally activated processes. This discoloration is more intense in the presence of iron and/or other transition or non-transition metals, which are known to form colored metal complexes with the dihydric phenols. This discoloration may cause quality issues in the production of the dihydric phenols and in the production of polycarbonates made using these dihydric phenols. The discoloration also lowers the commercial value of the dihydric phenols and the polycarbonates made therefrom.

In order to prevent or minimize the discoloration of dihydric phenols, it is known to mix the dihydric phenol with a suitable stabilizer. However, the effective quantity and the compatibility of the stabilizer depends very much on the process conditions used for making the dihydric phenols and the corresponding polycarbonates, the level of trace metals already present in the dihydric phenols and whether the dihydric phenol is exposed to metal parts or containers during storage or during the preparation of the polycarbonates. Further, the stabilizers known in the art are low boilers or decompose at high temperatures and release corrosive chemicals causing discoloration of dihydric phenols either in contact with air or metal. It is not economically feasible in the process to have completely metal-free dihydric phenols. It is also not economically viable to use an all glass assembly to avoid contact with metal during storage or during the polymerization reactions.

Hence there is a need for suitable stabilizers that will prevent or minimize the discoloration of dihydric phenols, especially under the high temperature conditions in which the polymerization reactions are conducted.

### BRIEF SUMMARY

Disclosed herein is a method for the stabilization of dihydric phenols in a polymerization reaction to provide a polycarbonate with a yellowness index (YI) of less than or equal to 10. The method helps to prevent or reduce the discoloration of the dihydric phenols in the presence of air and/or under high temperature conditions, for example, at temperatures that are required for a polymerization reaction.

In one embodiment, a method of producing a polycarbonate comprises polymerizing a dihydric phenol and a carbonate precursor in the presence of a stabilizer to provide a polycarbonate with a yellowness index of less than or equal to 10 measured in accordance with ASTM E313 test method on molded samples having a thickness of about 2.5 millimeters; wherein the stabilizer is selected from the group consisting of ascorbic acid, salts of ascorbic acid, esters of ascorbic acid and a mixture of two or more of the foregoing; wherein the dihydric phenol is represented by Formula (I): 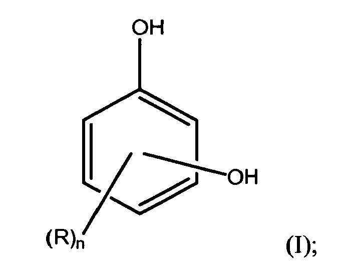 wherein R is a hydrogen atom or an aliphatic functionality having 1 to 6 carbon atoms; and "n" is an integer having a value of .1 to 4.

The disclosure may be understood more readily by reference to the following detailed description and the examples included therein.

### DETAILED DESCRIPTION

Disclosed herein is a process for preventing or minimizing discoloration of polycarbonates. Also disclosed are methods for the stabilization of the dihydric phenols used for preparing the polycarbonates. The polycarbonates prepared herein using the stabilized dihydric phenols, such as for example, methyl hydroquinone, can be used in speciality applications, such as in packaging for cosmetic, perfume and biochemical applications.

The singular forms "a", "an" and "the" include plural referents unless the context clearly dictates otherwise. All ranges disclosed herein are inclusive of the recited endpoint and independently combinable (for example ranges of "from about 2 grams to about 10 grams" is inclusive of the endpoints and all the intermediate values of the ranges of 2 grams to about 10 grams).

The modifier "about" used in connection with a quantity is inclusive of the stated value and has the meaning dictated by the context (for example, includes the degree of error associated with the measurement of the particular quantity).

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, - CHO is attached through carbon of the carbonyl group.

As used herein, the term "cycloaliphatic functionality" designates cyclic aliphatic functionalities having a valence of at least one and comprising an array of atoms which is cyclic but which is not aromatic. A "cycloaliphatic functionality" may comprise one or more noncyclic components. For example, a cyclohexylmethyl group (C₆H₁₁CH₂) is a cycloaliphatic functionality, which comprises a cyclohexyl ring (the array of atoms which is cyclic but which is not aromatic) and a methylene group (the noncyclic component). The cycloaliphatic functionality may include heteroatoms such as nitrogen, sulfur, selenium, silicon and oxygen, or may be composed exclusively of carbon and hydrogen. For convenience, the term "cycloaliphatic functionality" is defined herein to encompass a wide range of functional groups such as alkyl groups, alkenyl groups, alkynyl groups, haloalkyl groups, conjugated dienyl groups, alcohol groups, ether groups, carboxylic acid groups, acyl groups (for example carboxylic acid derivatives such as esters and amides), amine groups and nitro groups. For example, the 4-methylcyclopent-1-yl group is a C₆ cycloaliphatic functionality comprising a methyl group, wherein the methyl group is a functional group which is an alkyl group. Similarly, the 2-nitrocyclobut-1-yl group is a C₄ cycloaliphatic functionality comprising a nitro group, wherein the nitro group is a functional group. A cycloaliphatic functionality may comprise one or more halogen atoms which may be the same or different. Exemplary cycloaliphatic functionalities comprise cyclopropyl, cyclobutyl, 1,1,4,4-tetramethylcyclobutyl, piperidinyl, 2,2,6,6-tetramethylpiperydinyl, cyclohexyl and cyclopentyl.

As used herein, the term "aromatic functionality" refers to an array of atoms having a valence of at least one comprising at least one aromatic group. The array of atoms having a valence of at least one, comprising at least one aromatic group, may include heteroatoms such as nitrogen, sulfur, selenium, silicon and oxygen, or may be composed exclusively of carbon and hydrogen. As used herein, the term "aromatic functionality" includes but is not limited to, phenyl, pyridyl, furanyl, thienyl, naphthyl, phenylene, and biphenyl functionalities. The aromatic functionality may also include nonaromatic components. For example, a benzyl group is an aromatic functionality that comprises a phenyl ring (the aromatic group) and a methylene group (the nonaromatic component). Similarly a tetrahydronaphthyl functionality is an aromatic functionality, comprising an aromatic group (C₆H₃) fused to a nonaromatic component (CH₂)₄. For convenience, the term "aromatic functionality" is defined herein to encompass a wide range of functional groups such as alkyl groups, haloalkyl groups, haloaromatic groups, alcohol groups, ether groups, carboxylic acid groups, acyl groups (for example carboxylic acid derivatives such as esters and amides), amine groups and nitro groups. For example, the 4-methylphenyl functionality is a C₇ aromatic functionality comprising a methyl group, wherein the methyl group is a functional group, which is an alkyl group. Similarly, the 2-nitrophenyl group is a C₆ aromatic functionality comprising a nitro group, wherein the nitro group is a functional group. Aromatic functionalities include halogenated aromatic functionalities. Exemplary aromatic functionalities include, but are not limited to, phenyl, 4-trifluoromethylphenyl, 4-chloromethylphen-1-yl, 3-trichloromethylphen-1-yl (3-CCl₃Ph-), 4-(3-bromoprop-1-yl)phen-1-yl (4-BrCH₂CH₂CH₂Ph-),4-aminophe-1-yl (4-H₂NPh-), 4-hydroxymethylphen-1-yl (4-HOCH₂Ph-), 4-methylthiophen-1-yl (4-CH₃SPh-), 3-methoxyphen-1-yl and 2-nitromethylphen-1-yl (2-NO₂CH₂Ph) and naphthyl.

As used herein the term "aliphatic functionality" refers to a linear or branched array of atoms that is not cyclic and has a valence of at least one. Aliphatic functionalities are defined to comprise at least one carbon atom. The array of atoms may include heteroatoms such as nitrogen, sulfur, silicon, selenium and oxygen or may be composed exclusively of carbon and hydrogen. For convenience, the term "aliphatic functionality" is defined herein to encompass, as part of the "linear or branched array of atoms which is not cyclic" a wide range of functional groups such as alkyl groups, haloalkyl groups, alcohol groups, ether groups, carboxylic acid groups, acyl groups (for example carboxylic acid derivatives such as esters and amides), amine groups and nitro groups. For example, the 4-methylpent-1-yl is a C₆ aliphatic functionality comprising a methyl group, wherein the methyl group is a functional group, which is an alkyl group. Similarly, the 4-nitrobut-1-yl group is a C₄ aliphatic functionality comprising a nitro group, wherein the nitro group is a functional group. An aliphatic functionality, may be a haloalkyl group which comprises one or more halogen atoms which may be the same or different. Exemplary aliphatic functionalities include, but are not limited to, methyl, ethyl, propyl, isopropyl, butyl, isobutyl, pentyl, isopentyl, trifluoromethyl, bromodifluoromethyl, chlorodifluoromethyl, chloromethyl, trichloromethyl, bromoethyl, 2-hexyl, hexamethylene, hydroxymethyl (i.e., CH₂OH), mereaptomethyl (CH₂SH), methylthio (SCH₃), methylthiomethyl (CH₂SCH₃), methoxy, methoxycarbonyl (CH₃OCO), nitromethyl (CH₂NO₂) and thiocarbonyl.

In one embodiment, a method of producing a polycarbonate comprises polymerizing a dihydric phenol and a carbonate precursor in the presence of a stabilizer to provide a polycarbonate with a yellowness index of less than or equal to 10 measured in accordance with ASTM E313 test method on molded samples having a thickness of about 2.5 millimeters, wherein the stabilizer is selected from the group consisting of ascorbic acid, salts of ascorbic acid, esters of ascorbic acid and a mixture of two or more of the foregoing. In one embodiment, the dihydric phenol has less or equal to 10 parts per million of oxalic acid, relative to the amount of the dihydric phenol.

The dihydric phenols that can be stabilized using the above process are represented by Formula (I): 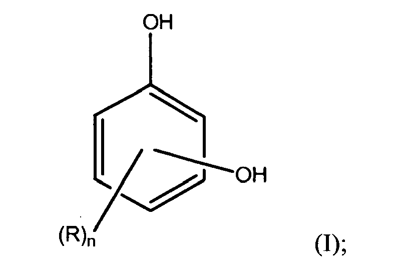 wherein R is a hydrogen atom or an aliphatic functionality having 1 to 6 carbon atoms and "n" is an integer having a value of 1 to 4. Specific non-limiting examples of the dihydric phenol of Formula (I) include hydroquinone, resorcinol, catechol, 2-methyl hydroquinone, 2,5-dimethyl hydroquinone, 2-ethyl hydroquinone, 2,5-diethyl hydroquinone, 2-tertiarybutyl hydroquinone, 2,3,5-trimethyl hydroquinone, 2-isopropyl hydroquinone, 2,5-diisopropyl hydroquinone, and mixtures of two or more of the foregoing dihydric phenols.

In another embodiment, a method of producing a polycarbonate comprises polymerizing a dihydric phenol and a carbonate precursor in the presence of a catalyst and a stabilizer to provide a polycarbonate with a yellowness index of less than or equal to 10 measured in accordance with ASTM E313 test method on molded samples having a thickness of 2.5 millimeters; wherein the stabilizer is selected from the group consisting of ascorbic acid, salts of ascorbic acid, esters of ascorbic acid and a mixture of two or more of the foregoing; wherein the dihydric phenol is represented by Formula (II): 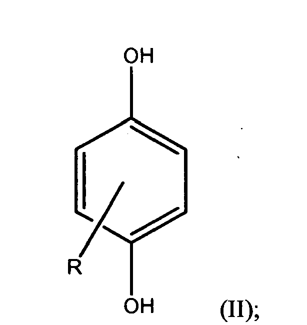 wherein R is a hydrogen atom or a methyl group.

In yet another embodiment, a method of producing a polycarbonate comprises polymerizing a dihydric phenol and an activated carbonate in the presence of a catalyst and a stabilizer to provide a polycarbonate with a yellowness index of less than or equal to 10 measured in accordance with ASTM E313 test method on molded samples having a thickness of 2.5 millimeters; wherein the stabilizer is selected from the group consisting of ascorbic acid, salts of ascorbic acid, esters of ascorbic acid and a mixture of two or more of the foregoing; and wherein the dihydric phenol is represented by Formula (II).

In one embodiment, the amount of stabilizer used is 20 ppm to 500 ppm, based on the amount of the dihydric phenol. Within this range the amount may be greater than or equal to 50 ppm, or more specifically, greater than or equal to 100 ppm based on the amount of the dihydric phenol. Also within this range the amount may be less than or equal to 450 ppm, or more specifically less than or equal to 300 ppm, based on the amount of the dihydric phenol.

In one embodiment, the step of polymerizing the dihydric phenol in the presence of a stabilizer comprises adding a stabilizer to the polymerization reaction mixture comprising the dihydric phenol, a carbonate precursor and a catalyst.

In another embodiment, the step of polymerizing the dihydric phenol in the presence of a stabilizer comprises mixing the dihydric phenol with a stabilizer to obtain a stabilized dihydric phenol. The stabilized dihydric phenol is then reacted with a carbonate precursor to obtain the polycarbonate.

The stabilizer can be mixed with the dihydric phenol used in the polymerisation reaction in a variety of ways as known to a person skilled in the art. Typically, a predetermined amount of the stabilizer is added to the dihydric phenol, and the resulting mixture is heated to a temperature higher than the melting point of the dihydric phenol under an inert gas atmosphere, for example, nitrogen gas, or under reduced pressure, for a period of time sufficient to obtain a uniform mixture. The melt is then allowed to cool. Alternately, the mixing of the stabilizer with the dihydric phenol may be carried out in an aqueous medium. If required, the mixture of the stabilizer and the dihydric phenol in the aqueous medium may be heated to a temperature where the dihydric phenol and the stabilizer dissolve in the aqueous medium. The stabilizer may be added in a solid powder form, in the form of an aqueous solution or in the form of a solution in a solvent that dissolves the stabilizer. In one embodiment, a predetermined amount of the stabilizer is added to the polymerization mixture comprising the dihydric phenol having Formula (I) before starting the polymerization reaction.

In one embodiment, the temperature at which the mixing of the stabilizer with the dihydric phenol can be carried out ranges from 25°C to 120°C. Within this range the temperature may be greater than or equal to 40°C, or more specifically, greater than or equal to 50°C. Also within this range the temperature may be less than or equal to 110°C, or more specifically, less than or equal to 80°C. The time taken for the mixing of the stabilizer can be 0.5 hours to 5 hours. Within this range the time may be greater than or equal to 2 hours, or more specifically, greater than or equal to 2.5 hours. Also within this range the time may be less than or equal to 4 hours, or more specifically, less than or equal to 3 hours.

In various embodiments, the polycarbonate can be prepared by using the interfacial polymerization method or by using the melt polymerization method. The reaction of the dihydric phenol with a carbonate precursor, such as, for example, phosgene, in the presence of water, an organic solvent, an acid acceptor and a catalyst is typical of the interfacial method. The reaction of the dihydric phenol with a carbonate precursor, such as, for example, diphenyl carbonate, in the presence of a catalyst and the absence of solvent is typical of the melt polymerization method. In one embodiment, the polycarbonate is prepared by using the melt polymerization method. The melt polymerization method can also be referred to as the melt transesterification method, transesterification method or simply as the melt method.

Suitable carbonate precursors that can be used in the polymerization reaction comprise a carbonyl halide, a haloformate, a carbonate ester or an activated carbonate. Specific non-limiting examples of carbonyl halides include carbonyl chloride (phosgene) and carbonyl bromide. Specific non-limiting examples of haloformates include bishaloformates of dihydric phenols, such as, for example, bischloroformates of hydroquinone, and bishaloformates of glycols, such as for example, bischloroformates of ethylene glycol, neopentyl glycol, and polyethylene glycol. Specific non-limiting examples of the carbonate esters include diphenyl carbonate, ditolyl carbonate, bis(chlorophenyl) carbonate, meta cresyl carbonate, dinaphthyl carbonate, bis(diphenyl) carbonate, diethyl carbonate, dimethyl carbonate, dibutyl carbonate, dicyclohexyl carbonate and a combination comprising two or more of the foregoing carbonate esters.

As used herein, the term "activated carbonate", also at times referred to as activated diaryl carbonate, is defined as a diaryl carbonate that is more reactive than diphenyl carbonate in transesterification reactions. In one embodiment, the activated carbonate typically has a Formula (III): 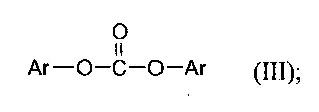 wherein Ar is a substituted aromatic functionality having 6 to 30 carbon atoms. In one embodiment, the activated carbonates have the more specific Formula (IV): 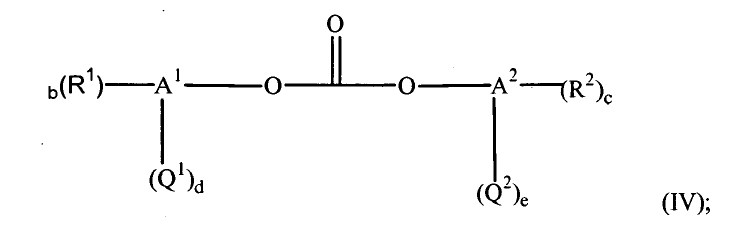 wherein Q¹ and Q² are each independently an activating group present on A¹ and A² respectively, positioned ortho to the carbonate linkage. A¹ and A² are each independently aromatic rings which can be the same or different depending on the number and location of their substituent groups; "d" and "e" have a value of 0 to a maximum equivalent to the number of replaceable hydrogen groups substituted on the aromatic rings A¹ and A² respectively, wherein "d + e" is greater than or equal to 1. R¹ and R² are each independently an aliphatic functionality, a cycloaliphatic functionality, an aromatic functionality, cyano, nitro or a halogen. The number "b" has a value of 0 to a maximum equivalent to the number of replaceable hydrogen atoms on the aromatic ring A¹ minus the number "d", and the number "c" is a whole number of from 0 to a maximum equivalent to the number of replaceable hydrogen atoms on the aromatic ring A² minus the number "e". The number, type and location of the R¹ or R² substituents on the aromatic ring is not limited unless they deactivate the carbonate and lead to a carbonate which is less reactive than diphenyl carbonate.

Suitable non-limiting examples of suitable activating groups Q¹ and Q² include (alkoxycarbonyl)aryl groups, halogens, nitro groups, amide groups, sulfone groups, sulfoxide groups, or imine groups with structures shown below: 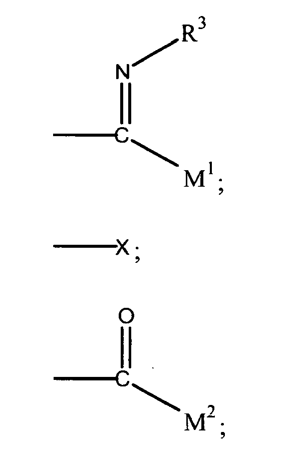 wherein X is halogen or nitro; M¹ and M² independently comprise N-dialkyl, N-alkylaryl, an aliphatic functionality or an aromatic functionality; and R³ is an aliphatic functionality or an aromatic functionality.

Specific non-limiting examples of activated carbonates include bis(o-methoxycarbonylphenyl)carbonate, bis(o-chlorophenyl)carbonate, bis(o-nitrophenyl)carbonate, bis(o-acetylphenyl)carbonate, bis(o-phenylketonephenyl)carbonate, bis(o-formylphenyl)carbonate. Unsymmetrical combinations of these structures where the type and number of substitutions on A¹ and A² are different can also be used as the carbonate precursor. In one embodiment, the activated carbonate is an ester-substituted diaryl carbonate having the Formula (V): 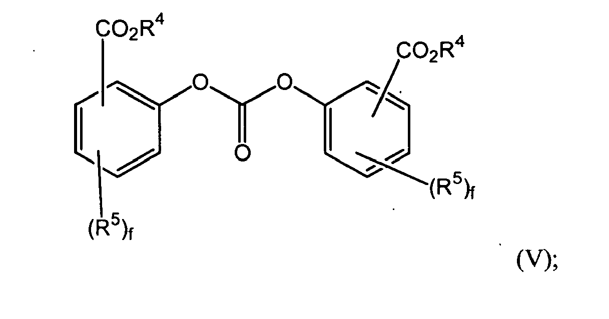 wherein R⁴ is independently at each occurrence an aliphatic functionality having 1 to 20 carbons, a cycloaliphatic functionality having 4 to 20 carbons, or an aromatic functionality having 4 to 20 carbons, R⁵ is independently at each occurrence a halogen atom, cyano group, nitro group, an aliphatic functionality having 1 to 20 carbons, a cycloaliphatic functionality having 4 to 20 carbons, or an aromatic functionality having 4 to 20 carbons and "F' is independently at each occurrence an integer having a value of 0 to 4. In one embodiment, at least one of the substituents -CO₂R⁴ is attached in an ortho position of Formula (V).

Examples of specific ester-substituted diaryl carbonates include, but are not limited to, bis(methylsalicyl)carbonate (CAS Registry No. 82091-12-1) (also known as BMSC or bis(o-methoxycarbonylphenyl)carbonate), bis(ethylsalicyl)carbonate, bis(propylsalicyl)carbonate, bis(butylsalicyl)carbonate, bis(benzylsalicyl)carbonate, bis(methyl-4-chlorosalicyl)carbonate and the like. In one embodiment, bis(methylsalicyl)carbonate is used as the activated carbonate in melt polycarbonate synthesis due to its lower molecular weight and higher vapor pressure.

Some non-limiting examples of rion-activating groups which, when present in an ortho position, would not be expected to result in activated carbonates are alkyl, cycloalkyl or cyano groups. Some specific and non-limiting examples of non-activated carbonates are bis(o-methylphenyl)carbonate, bis(p-cumylphenyl)carbonate, bis(p-(1,1,3,3-tetramethyl)butylphenyl)carbonate and bis(o-cyanophenyl)carbonate. Unsymmetrical combinations of these structures are also expected to result in non-activated carbonates.

The polycarbonates prepared herein can either be homopolymers or co-polymers. The co-polymers can be prepared in the presence of the stabilizer by using the dihydric phenols of Formula (I) in combination with dihydroxy compounds having Formula (VI): 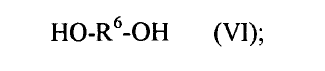 wherein R⁶ includes a functionality of Formula (VII): 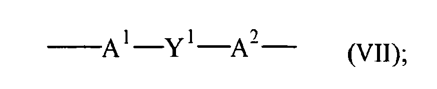 and wherein Y¹ is independently selected from the group consisting of an aliphatic functionality having 1 to 50 carbon atoms, a halogen, an oxy group and a nitro group, and A¹ and A² are as defined above. In another embodiment, the dihydroxy compound includes bisphenol compounds of general Formula (VIII): 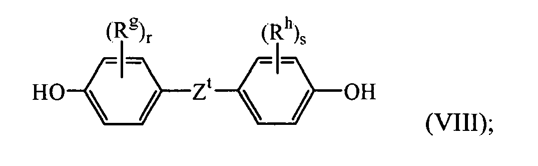 wherein R^{g} and R^{h} each independently represent a halogen atom or an aliphatic functionality having 1 to 10 carbon atoms and may be the same or different; "r" and "s" are each independently integers having a value of 0 to 4; and Z^{t} represents one of the groups of Formula (IX): 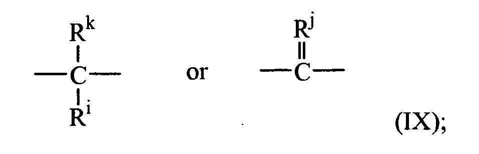 wherein R^{k} and Rⁱ each independently represent a hydrogen atom or an aliphatic functionality having 1 to 10 carbon atoms or a cycloaliphatic functionality having 3 to 10 carbon atoms and Rⁱ is a divalent aliphatic functionality having 1 to 10 carbon atoms.

Some non-limiting examples of suitable dihydroxy compounds of Formula (VI) that may be used in combination with the dihydric phenol of Formula (I) include, but are not limited to, 1,1-bis-(4-hydroxy-3-methylphenyl)cyclohexane, 2-phenyl-3,3-bis(4-hydroxyphenyl)phthalimidine, eugenol siloxane bisphenol, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)- -naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2;2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, as well as combinations comprising at least one of the foregoing dihydroxy compounds.

Specific examples of the types of dihydroxy compounds may include, but are not limited to, 1,1-bis(4-hydroxyphenyl) methane, 1,1-bis(4-hydroxyphenyl) ethane, 2,2-bis (4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, and 1,1-bis(4-hydroxy-t-butylphenyl) propane. Combinations comprising at least one of the foregoing dihydroxy compounds may also be used. In onc embodiment, the bisphenol compound used is bisphenol A.

The polycarbonates prepared by following the process described herein typically comprise 1 to 100 mole percent of the dihydric phenol having Formula (I) and 0 to 99 mole percent of the dihydroxy compound having Formula (VI). In one embodiment, both the dihydric phenol and the dihydroxy compound are present in an amount of 50 mole percent each. In another embodiment, the polycarbonate comprises two or more dihydric phenols, such as, for example methyl hydroquinone and hydroquinone, and a dihydroxy compound, in equimolar quantities.

Catalysts known for use in melt transesterification processes may be used in reactions involving activated carbonates. Known melt catalysts include, for example, salts of alkaline earth metals, salts of alkali metals, quaternary ammonium compounds, quaternary phosphonium compounds, and mixtures thereof. It is often advantageous to use a combination of some amount of a salt of an alkaline earth metal and/or an alkali metal (i.e., an "alpha" catalyst) that does not degrade at temperatures used throughout the reaction together with a quaternary ammonium and/or a quaternary phosphonium compound that degrades at a temperature used in the reaction (i.e., a "beta" catalyst). Some non-limiting examples of alpha catalysts include sodium hydroxide, potassium hydroxide, sodium potassium hydrogen phosphate and lithium hydroxide. Some non-limiting examples of beta catalysts include tetramethylammonium hydroxide, tetrabutylammonium hydroxide, tetramethylphosphonium hydroxide, tetraphenylphosphonium hydroxide, tetraphenylphosphonium acetate, tetramethylphosphonium formate, tetrabutylphosphonium hydroxide, and tetrabutylphosphonium acetate. In one embodiment, the total amount of catalyst employed is 1 x 10⁻⁷ to 1x 10⁻² moles, more specifically 1 x 10⁻⁶ to 1 x 10⁻³ moles, or even more specifically 1 x 10⁻⁵ to 1 x 10⁻⁴ moles of catalyst based on the total moles of the mixture of dihydric phenol of Formula (I) and dihydroxy compound of Formula (VI) employed. In one embodiment, the alpha catalyst used is sodium hydroxide. In one embodiment, the beta catalyst used is tetrabutylphosphonium acetate or tetramethylammonium hydroxide.

In another embodiment, the dihydric phenol comprises methyl hydroquinone or hydroquinone

The reactants for the polymerization reaction can be charged into a reactor either in the solid form or in the molten form. Initial charging of reactants into a reactor and subsequent mixing of these materials under reactive conditions for polymerization may be conducted in an inert gas atmosphere, such as a nitrogen atmosphere. The charging of one or more reactant may also be done at a later stage of the polymerization reaction. Mixing of the reaction mixture is accomplished by any of the methods known in the art, such as by stirring. Process parameters include time, temperature, pressure and other factors that affect polymerization of the reactants. In one embodiment, the activated aromatic carbonate is added in a mole ratio of 0.8 to 1.3, relative to the total number moles of the dihydric phenol and the dihydroxy compound (if used). Within this range the molar ratio may be greater than or equal to 0.9, or more specifically, greater than or equal to 1.0, relative to the total number of moles of the dihydric phenol and the dihydroxy compound. Also within this range the molar ratio may be less than or equal to 1.2, or more specifically less than or equal to 1.1, relative to the total number of moles of the dihydric phenol and the dihydroxy compound.

The melt polymerization reaction is conducted by subjecting the above reaction mixture to a series of temperature-pressure-time protocols. In some embodiments, this involves gradually raising the reaction temperature in stages while gradually lowering the pressure in stages. In one embodiment, the pressure is reduced from about atmospheric pressure at the start of the reaction to 0.01 millibar (1 Pa) or in another embodiment, to 0.05 millibar (5 Pa) in several steps as the reaction approaches completion. The temperature may be varied in a stepwise fashion beginning at a temperature of about the melting temperature of the reaction mixture and subsequently increasing to 320°C. In one embodiment, the reaction mixture is heated from room temperature to 150°C. The polymerization reaction starts at a temperature of 150°C to 220°C depending on the starting dihydric phenol and dihydroxy compound. The temperature is then accordingly increased to 220°C to 250°C and is then further increased to a temperature of about 250°C to 320°C. It is to be noted that the temperature ranges are maintained to ensure that the reaction mixture stays in a melt condition and the reaction proceeds in the forward direction. In one embodiment, the total reaction time is 30 minutes to 200 minutes. This procedure will generally ensure that the reactants react to give polycarbonates with the desired molecular weight, glass transition temperature and physical properties. The reaction proceeds to build the polycarbonate chain with the production of an ester-substituted alcohol by-product, such as methyl salicylate. Efficient removal of the by-product may be achieved by different techniques, such as reducing the pressure. Generally the pressure is relatively high in the beginning of the reaction and is lowered progressively throughout the reaction while the temperature is raised throughout the reaction. However, experimentation is needed to find the most efficient conditions for particular production equipment.

The progress of the reaction may be monitored by measuring the melt viscosity or the weight average molecular weight of the reaction mixture using techniques known in the art such as gel permeation chromatography. These properties may be measured by taking discreet samples or may be measured on-line at specific time intervals. After the desired melt viscosity and/or molecular weight is reached, the final polycarbonate product may be isolated from the reactor in a solid or molten form. The method of making the polycarbonate as described herein may be in a batch or a continuous process, and the process disclosed herein is essentially carried out in a solvent free mode. Reactors chosen should ideally be self-cleaning and should minimize any hot spots. The vented extruders that are commercially available may be used.

In one embodiment, the polycarbonate may be prepared in an extruder in the presence of one or more catalysts and a carbonate precursor wherein the carbonate precursor is an activated carbonate. The reactants for the polymerization reaction can be fed to the extruder in powder or molten form. In one embodiment, the reactants are dry blended prior to being added in to the extruder. As disclosed herein, the reactants typically comprise dihydric phenol, dihydroxy compound, carbonate precursor, and the stabilizer. The extruder may be equipped with pressure reducing devices (e.g., vents), which serve to remove the activated phenol by-product and thus drive the polymerization reaction toward completion. The molecular weight of the polycarbonate product may be manipulated by controlling, among other factors, the feed rate of the reactants, the type of extruder, the extruder screw design and configuration, the residence time in the extruder, the reaction temperature and the pressure reducing techniques present on the extruder. The molecular weight of the polycarbonate product may also depend upon the structures of the reactants. Many different screw designs and extruder configurations are commercially available that use single screws, double screws, vents, back flight and forward flight zones, seals, sidestreams and sizes. One skilled in the art may have to experiment to find the best designs using generally known principals of commercial extruder design.

As previously discussed, the polycarbonates prepared in the presence of stabilizers show a substantially less discoloration compared to the polycarbonates prepared in the absence of stabilizers. Without being bound by theory it is believed that the discoloration of the dihydric phenols can be attributed to the formation of the corresponding benzoquinone compounds and benzoquinone like compounds. The dihydric phenols form the corresponding benzoquinone and benzoquinone like compounds in the presence of air and/or high temperature conditions as well as in the presence of trace amounts of metals, like iron (Fe), present in the dihydric phenols. Benzoquinone and benzoquinone like compounds are colored, for example, methyl benzoquinone (MeBQ) is yellow in color. The benzoquinone like compounds include oligomers of benzoquinone like compounds, and these compounds are also colored. These benzoquinone and benzoquinone like compounds may result in the corresponding polymer having a YI of greater than 10. However the presence of stabilizers prevents or minimizes the formation of the colored compounds, thereby maintaining the APHA (American Public Health Association) value of the dihydric phenol at less than or equal to 40 and the YI value of the corresponding polymer at less then 10. Without being bound by theory, it is believed that the stabilizers form chelates or complexes with the trace metals, thereby retarding the formation of the corresponding benzoquinone and benzoquinone like compounds.

The polycarbonates prepared in the presence of the stabilizers show required molecular weight build up and improved color compared to polycarbonates prepared in the absence of stabilizers. The color improvement in the stabilized dihydric phenol can be measured in terms of APHA values. The color improvement in the polymer prepared using the stabilized dihydric phenols can be measured in terms of YI.

The polycarbonates prepared using the process described herein can be used in various polymer compositions. The compositions may further optionally include various additives ordinarily incorporated in resin compositions of this type. Such additives may include antioxidants, heat stabilizers, flame retardants, UV stabilizers, anti-static agents (tetraalkylammonium benzene sulfonate salts, tetraalkylphosphonium benzene sulfonate salts, and the like), mold releasing agents (pentaerythritol tetrastearate, glycerol monostearate, and the like), and the like, and combinations comprising the foregoing. For example, the polymer composition can comprise a heat stabilizer from 0.01 weight percent to 0.1 weight percent; an antistatic agent from 0.01 weight percent to 1 weight percent; and/or a mold releasing agent from 0.1 weight percent to 1 weight percent, each based upon the total weight of the polymer.

The polymer compositions may be used for any application in which the physical and chemical properties of the material are desired. In certain embodiments, the polymers may be used in applications including packaging material (and especially drug and cosmetic packaging), automotive parts, telecommunication accessories (for example, cell phone covers), computers and consumer electronics, construction materials, medical devices, eyewear products, secure documents including passports and ID cards, credit cards, films and sheets (including those used in display applications), and the like.

A further understanding of the techniques described above can be obtained by reference to certain specific examples that are provided herein for purposes of illustration only and are not intended to be limiting.

### EXAMPLES

The following examples illustrate the advantage of adding a stabilizer to the dihydric phenol by demonstrating a decrease in the APHA values of the monomer and an improvement in the YI values of the polymer prepared using the stabilized monomer.

Methyl hydroquinone (MeHQ) used in the examples was obtained from commercial sources, such as for example, from Hunan in China and from Shirdi Chemicals in India. The sample was about 99 percent pure when analyzed using High Performance Liquid Chromatography (HPLC) using a Shimadzu 2010 HPLC instrument, based on weight percent. The starting sample of MeHQ is hereinafter referred to as raw MeHQ.

The molecular weight (MW) of the co-polymer was determined by Gel Permeation Chromatography (GPC) technique. A Shimadzu system connected with a UV-detector (254 nm) was used for this purpose. A sample of the co-polymer was dissolved in chloroform and injected into a PLgel 5 micrometer column at 35°C, and the molecular weight measured using polystyrene standards in methylene chloride solvent.

The YI values were measured as follows. About 2 g of dried co-polymer samples were compression molded into a round discs with a diameter of 3.5 centimeter at a temperature of 180°C. The percentage transmittance of these discs was then measured using a GretagMacbeth Color Eye 7000 spectrophotometer over a range of 400 nm to 700 nm. The spectrophotometer provided a percentage Transmittance (% T) values which was then converted to absorbance values (A) using the correlation A = 2-log % T. Since absorbance has a linear function with thickness (Beer-Lambert law) the samples were corrected for (small) differences in thickness (measured with a micrometer). The % T data for all samples was converted to transmittance data for 2.5 millimeter thick samples. The corrected % T data was then used for calculating the CIE tristimulus values using the procedure described in ISO standard 7724. These tristimulus values were then used to calculate YI in accordance with ASTM E313 test method.

The APHA value was measured on a Macbeth Spectrophotometer over a wavelength range form 200 nm to 700 nm. A 10 weight percent (weight by volume) solution of MeHQ in acetonitrile (i.e., 2.5 grams of MeHQ in 25 milliliters of acetonitrile) was used for measuring the APHA values.

The raw MeHQ typically contains about 400 to 500 ppm of oxalic acid. As indicated by CE-6 in the Example section below, if MeHQ containing 500 ppm of oxalic acid is used for the polymerization reaction, the average molecular weight of the polycarbonate obtained is low based on polystyrene standards in methylene chloride solvent. Further, as indicated in CE-3 the presence of 500 ppm of oxalic acid results in a higher amount of MeBQ formation even in the presence of a nitrogen atmosphere. Hence, the raw MeHQ is subjected to a purification process to reduce the amount of oxalic acid present before being used in the polymerization reaction.

The raw MeHQ was purified using the process given below before being used in the Examples. To a 50 liter glass reactor maintained under a nitrogen blanket were added 4.125 kilograms (kg) MeHQ, 250 g silica gel (60-200 mesh) and 40 liter toluene. The reactor contents were then heated to a temperature of 110 to 115°C under stirring at a rate of 250 rotations per minute. After the complete dissolution of the MeHQ in toluene, the reactor contents were filtered through a fritted funnel pre-heated to a temperature of 155°C. The filtrate containing the MeHQ solution was collected into a stainless steel vessel maintained under nitrogen atmosphere and the silica gel was collected on the funnel. The stainless steel vessel was then cooled for about 24 hours to obtain crystallized MeHQ. The crystallized MeHQ was isolated using a 24 inch centrifugal filter and washed with about 8 liters of toluene in the centrifugal filter. After centrifuging to remove the maximum amount of toluene possible, the solid MeHQ was transferred to glass drying pans and dried in an over at 65°C under vacuum. The purified MeHQ was found to contain less than 10 ppm of oxalic acid, as measured by an HPLC technique described below.

The analysis of oxalic acid content in the purified MeHQ was carried out using a Shimadzu 2010 (HPLC) instrument. The column used was a Shodex SUGAR SH-G SH1011 (8 x 300 mm) column. The instrument was first calibrated to estimate the retention time of oxalic acid. Then a 20 microliter sample solution prepared using 300 mg MeHQ in 10 ml acetonitrile was injected into the column. The mobile phase used to elute the sample in the column was a 0.01 normal sulfuric acid solution in water, with a flow rate of 1.0 ml/ minute. A wavelength of 204 nm was used for the detection. The column was maintained at a temperature of 50°C. Area under the peak was measured for the peak obtained at the corresponding retention time of Oxalic acid. As used herein the term "control sample" means a dihydric phenol sample (for example, MeHQ) that does not contain any ascorbic acid stabilizer and that has been purified to remove the oxalic acid. The HPLC instrument cannot detect an amount of less than 10 ppm of oxalic acid. Therefore, purified samples and control samples may have a residual level of oxalic acid impurity of less than 10 ppm. In the tables below where the control sample is directly used in the examples, the term "No stabilizer (control sample)" is used to indicate that no stabilizer is added in the Example.

### Example 1:

A stock solution of 16 milligrams of ascorbic acid in 100 milliliters of water was prepared. 100 microliters of this stock solution was added to 1.0 gram (g) of MeHQ (control sample) contained in a round bottom flask. The resultant mixture was purged with nitrogen for about 5 minutes and then heated to about 160°C for about 2 hours under a nitrogen blanket to obtain a melt of stabilized MeHQ. The APHA value of the melt of the stabilized MeHQ was measured. The results are tabulated in Table 1 below.

### Comparative Example-1 (CE-1):

In this example the MeHQ (control sample) was purged with nitrogen for about 5 minutes and then heated to 160°C for about 2 hours under a nitrogen blanket to obtain a melt of the MeHQ (control sample). The APHA value of the melt of the MeHQ (control sample) was measured. The results are tabulated in Table 1 below.

**Table 1**

| Example | Ascorbic Acid in ppm | APHA |
|---|---|---|
| 1 | 100 | 37 |
| CE-1 | No stabilizer (control sample) | 139 |

Example 1 indicates that the presence of 100 ppm of ascorbic acid in MeHQ is an effective stabilizer.
Examples 2 and 3 and Comparative Examples 2 and 3 (CE-2 and CE-3):
   In Example 2, in a round bottom flask, 10 g of MeHQ (control sample) was mixed with 1000 microliter of stabilizer stock solution (as prepared in Example 1) and the resultant mixture was melted at 160°C under nitrogen atmosphere for about two hours. Another sample of the resultant mixture was melted at 160°C in the presence of atmospheric air.
   In Example 3, in a round bottom flask, 10 g of MeHQ (control sample) was mixed with 200 microliter of stabilizer stock solution (as prepared in Example 1) and the resultant mixture was melted at 160°C under nitrogen atmosphere for about two hours. Another sample of the resultant mixture was melted at 160°C in the presence of atmospheric air.

In CE-2, the MeHQ (control sample) was melted using a similar method as described in Example 2 above. In CE-3, oxalic acid was added to the MeHQ (control sample) to have a resultant amount of 500 ppm of oxalic acid and the resultant mixture was melted using the same method as described in Example 2 above.

The amount of MeBQ that was formed in Examples 2, 3, CE-2 and CE-3 in the presence of nitrogen atmosphere was measured by HPLC, using a Shimadzu 2010 HPLC instrument. The results are tabulated in Table 2 below.

**Table 2**

| Examples | Ascorbic acid in ppm | Nitrogen atmosphere MeBQ measured in ppm |
|---|---|---|
| 2 | 500 | 6.5 |
| 3 | 100 | <5 |
| CE-2 | No Stabilizer (control sample) | 55 |
| CE-3 | 500 (oxalic acid) | 33 |

Examples 2 and 3 show that the amount of MeBQ formed in a nitrogen atmosphere is much lower when using ascorbic acid as a stabilizer than when oxalic acid or no stabilizer is used.

Examples 4 to 8, Comparative Examples 4 to 6 (CE-4 to CE-6):
To a glass reactor tube was charged bisphenol A (6.8 g), MeHQ (control sample, 3.7 g), transesterification catalyst (sodium hydroxide (11.91 micrograms) and tetramethylammonium hydroxide (135 micrograms)), both added combined as a solution in 50 microliter Milli-Q quality water), BMSC (20 g) and ascorbic acid or oxalic acid (amount as provided in Table 3, relative to MeHQ; added as a solution in 50 microliter Milli-Q quality water). In CE-4 no stabilizer was added and the MeHQ (control sample) was directly used for preparing the polycarbonate co-polymer. The reaction mixture was then purged with nitrogen. The reaction mixture was then heated to a temperature of 180°C under atmospheric pressure. After maintaining the reaction mixture at this temperature for about 15 minutes, the reaction mixture was stirred and under stirring the pressure of the reaction mixture was reduced to 500 millibar. After about 45 minutes the reactor was heated to 270°C and after another 5 minutes the reactor was heated to 300°C and the pressure reduced to 0.5 millibar. The reaction mixture was then maintained under these conditions for about 10 minutes. The pressure in the reactor was then raised to atmospheric pressure using nitrogen. Using this procedure, MeHQ-bisphenol A polycarbonate co-polymer (50 by 50 mole percent) was prepared and the properties, such as molecular weight and yellowness index, were evaluated. The MeHQ-bisphenol A polycarbonate co-polymer was clear, and the molecular weight build up was in the range of 39000 to 75000 (molecular weight based on polystyrene standards in methylene chloride solvent - MWPS). The results are tabulated in Table 3 below.

**Table 3**

| Example | Stabilizer | Quantity in ppm | MWPS | YI |
|---|---|---|---|---|
| 4 | Ascorbic Acid | 100 | 39377 | 7.63 |
| 5 | Ascorbic acid | 100 | 42325 | 8.22 |
| 6 | Ascorbic acid Magnesium salt | 100 (corresponding to Ascorbic acid) | 53398 | 7.87 |
| 7 | Ascorbic Acid Sodium salt | 100 (corresponding to Ascorbic acid) | 72337 | 9.25 |
| 8 | Ascorbic Acid | 500 | 19557 | NT |
| CE-4 | No stabilizer (control sample) | undetectable | 41547 | 10.83 |
| CE-5 | Oxalic Acid | 100 | 22965 | NT |
| CE-6 | Oxalic Acid | 500 | 8276 | NT |

Comparing samples with the same effective amount of the two types of stabilizers shows that the ascorbic acid is a much better stabilizer than oxalic acid in MeHQ. The molecular weight build up and YI of the samples stabilized with ascorbic acid are superior to those with no stabilizer or with oxalic acid stabilizer.

## Claims

1. A method of producing a polycarbonate, the method comprising:
polymerizing a dihydric phenol and a carbonate precursor in the presence of a stabilizer to provide a polycarbonate with a yellowness index of less than or equal to 10 measured in accordance with ASTM E313 test method on molded samples having a thickness of 2.5 millimeters;
wherein the stabilizer is selected from the group consisting of ascorbic acid, salts of ascorbic acid, esters of ascorbic acid and a mixture or two or more of the foregoing; wherein the dihydric phenol is represented by Formula (I): 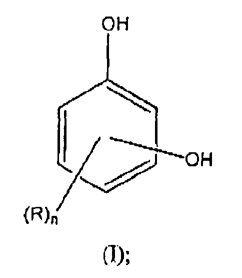 wherein R is a hydrogen atom or an aliphatic functionality having 1 to 6 carbon atoms: and n is an integer having a value of 1 to 4.

2. The method of Claim 1, wherein the stabilizer is present in an amount of 20 parts per million to 500 parts per million, relative to an amount of the dihydric phenol.

3. The method of Claim 1, wherein the dihydric phenol has less than or equal to 10 parts per million of oxalic acid, relative to the amount of the dihydric phenol.

4. The method of Claim 1, wherein the step of polymerizing the dihydric phenol in the presence of a stabilizer comprise:
mixing the dihydric phenol with a stabilize to obtain a stabilized dihydric phenol; and polymerizing the stabilized dihydric phenol in the presence of a carbonate precursor, and a catalyst.

5. The method of Claim 4, wherein the mixing is effected at a temperature higher than the melting point of the dihydric phenol.

6. The method of Claim 4. wherein the mixing is effected under atmospheric pressure or under a reduced pressure.

7. The method of Claim 1, wherein the carbonate precursor comprises a carbonyl halide, a haloformate, a carbonate ester or an activated carbonate.

8. The method of Claim 1, wherein the carbonate precursor comprises bis(methylsalicyl)carbonate.

9. The method of Claim 4, wherein the catalyst comprises:
a. an alpha catalyst selected from the group consisting of alkali metal salts and alkaline earth metal salt; and
b. a beta catalyst selected from the group consisting of a quaternary ammonium compound and a quaternary phosphonium compound.

10. The method of Claim 1, wherein the dihydric phenol comprises methyl hydroquinone or hydroquinone.

11. The method of Claim 1, wherein polymerizing is also in the presence of a catalyst and the dihydric phenol is represented by Formula (II): 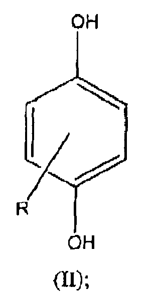 wherein R is a hydrogen atom or a methyl group.

12. The method of claim 11, wherein the carbonate precursor is an activated carbonate, wherein the activated carbonate is a diaryl carbonate that is more reactive than a diphenyl carbonate in transesterification reactions.

13. The method of Claim 11 or 12, herein the catalyst comprises:
a. an alpha catalyst selected from the group consisting of alkali metal salts and alkaline earth metal salt; and
b. a beta catalyst selected from the group consisting of a quaternary ammonium compound and a quaternary phosphonium compound.

14. The method of Claim 12, wherein the activated carbonate comprises bis(methylsalicyl)carbonate.

## Patentansprüche

1. Ein Verfahren zur Herstellung eines Polycarbonats, wobei das Verfahren Folgendes umfasst:
Polymerisation eines zweiwertigen Phenols und eines Carbonatvorläufers in Anwesenheit eines Stabilisators zur Bereitstellung eines Polycarbonats mit einem Gelbheitsindex von weniger als oder gleich 10, gemessen nach dem ASTM E313-Testverfahren an Formproben mit einer Dicke von 2,5 Millimetern,
worin der Stabilisator gewählt ist aus der Gruppe bestehend aus Ascorbinsäure, Salzen von Ascorbinsäure, Estern von Ascorbinsäure und einer Mischung aus zwei oder mehr der oben Genannten, worin das zweiwertige Phenol dargestellt wird durch die Formel (I): 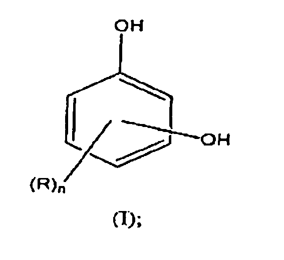 worin R ein Wasserstoffatom oder eine aliphatische Funktionalität mit 1 bis 6 Kohlenstoffatomen ist und n eine ganze Zahl mit einem Wert von 1 bis 4 ist.

2. Das Verfahren gemäß Anspruch 1, worin der Stabilisator, relativ zu einer Menge des zweiwertigen Phenols, in einer Menge von 20 Teilen je Million Teile bis zu 500 Teilen je Million Teile anwesend ist.

3. Das Verfahren gemäß Anspruch 1, worin das zweiwertige Phenol weniger als oder gleich 10 Teile je Million Teile Oxalsäure, relativ zur Menge des zweiwertigen Phenols, hat.

4. Das Verfahren gemäß Anspruch 1, worin der Schritt der Polymerisation des zweiwertigen Phenols in Anwesenheit eines Stabilisators Folgendes umfasst:
Mischen des zweiwertigen Phenols mit einem Stabilisator zur Gewinnung eines stabilisierten zweiwertigen Phenols und Polymerisation des stabilisierten zweiwertigen Phenols in Anwesenheit eines Carbonatvorläufers und eines Katalysators.

5. Das Verfahren gemäß Anspruch 4, worin das Mischen bei einer Temperatur durchgeführt wird, die höher ist als der Schmelzpunkt des zweiwertigen Phenols.

6. Das Verfahren gemäß Anspruch 4, worin das Mischen unter atmosphärischem Druck oder unter einem verminderten Druck durchgeführt wird.

7. Das Verfahren gemäß Anspruch 1, worin der Carbonatvorläufer ein Carbonylhalogenid, ein Haloformiat, einen Carbonatester oder ein aktiviertes Carbonat umfasst.

8. Das Verfahren gemäß Anspruch 1, worin der Carbonatvorläufer Bis(methylsalicyl)carbonat umfasst.

9. Das Verfahren gemäß Anspruch 4, worin der Katalysator Folgendes umfasst:
a. einen Alpha-Katalysator, gewählt aus der Gruppe bestehend aus Alkalimetallsalzen und Erdalkalimetallsalz, und
b. einen Beta-Katalysator, gewählt aus der Gruppe bestehend aus einer quartären Ammoniumverbindung und einer quartären Phosphoniumverbindung.

10. Das Verfahren gemäß Anspruch 1, worin das zweiwertige Phenol Methylhydrochinon oder Hydrochinon umfasst.

11. Das Verfahren gemäß Anspruch 1, worin die Polymerisation auch in Gegenwart eines Katalysators stattfindet und das zweiwertige Phenol dargestellt wird durch die Formel (II): 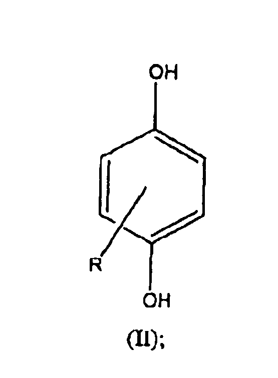 worin R ein Wasserstoffatom oder eine Methylgruppe ist.

12. Das Verfahren gemäß Anspruch 11, worin der Carbonatvorläufer ein aktiviertes Carbonat ist, worin das aktivierte Carbonat ein Diarylcarbonat ist, das reaktiver ist als ein Diphenylcarbonat in Umesterungsreaktionen.

13. Das Verfahren gemäß Anspruch 11 oder 12, worin der Katalysator Folgendes umfasst:
a. einen Alpha-Katalysator, gewählt aus der Gruppe bestehend aus Alkalimetallsalzen und Erdalkalimetallsalz, und
b. einen Beta-Katalysator, gewählt aus der Gruppe bestehend aus einer quartären Ammoniumverbindung und einer quartären Phosphoniumverbindung.

14. Das Verfahren gemäß Anspruch 12, worin das aktivierte Carbonat Bis(methylsalicyl)carbonat umfasst.

## Revendications

1. Procédé de fabrication d'un polycarbonate, le procédé comprenant :
la polymérisation d'un phénol dihydrique et d'un précurseur de carbonate, en présence d'un stabilisateur, pour fournir un polycarbonate ayant un indice de jaunissement inférieur ou égal à 10, mesuré selon la méthode de test ASTM E313, sur des échantillons moulés ayant une épaisseur de 2,5 millimètres ;
dans lequel le stabilisateur est sélectionné dans le groupe constitué de l'acide ascorbique, de sels de l'acide ascorbique, d'esters de l'acide ascorbique et d'un mélange de deux ou plus des précédents ; dans lequel le phénol dihydrique est représenté par la formule (I) : 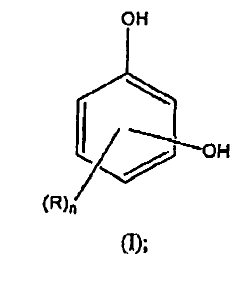 dans lequel R est un atome d'hydrogène ou une fonctionnalité aliphatique, ayant de 1 à 6 atomes de carbone ; et n est un entier ayant une valeur de 1 à 4.

2. Procédé selon la revendication 1, dans lequel le stabilisateur est présent en une quantité de 20 parties par million à 500 parties par million, par rapport à une quantité du phénol dihydrique.

3. Procédé selon la revendication 1, dans lequel le phénol dihydrique comprend une quantité inférieure ou égale à 10 parties par million d'acide oxalique, par rapport à la quantité de phénol dihydrique.

4. Procédé selon la revendication 1, dans lequel l'étape de polymérisation du phénol dihydrique en présence d'un stabilisateur comprend :
le mélange du phénol dihydrique avec un stabilisateur, pour obtenir un phénol dihydrique stabilisé ; et la polymérisation du phénol dihydrique stabilisé en présence d'un précurseur de carbonate et d'un catalyseur.

5. Procédé selon la revendication 4, dans lequel le mélange est effectué à une température supérieure au point de fusion du phénol dihydrique.

6. Procédé selon la revendication 4, dans lequel le mélange est effectué sous pression atmosphérique, ou sous une pression réduite.

7. Procédé selon la revendication 1, dans lequel le précurseur de carbonate comprend un halogénure carbonyle, un haloformate, un ester de carbonate ou un carbonate activé.

8. Procédé selon la revendication 1, dans lequel le précurseur de carbonate comprend du bis(méthylsalicyl)carbonate.

9. Procédé selon la revendication 4, dans lequel le catalyseur comprend :
a. un catalyseur alpha, sélectionné dans le groupe constitué de sels de métaux alcalins et de sel de métaux alcalino-terreux ; et
b. un catalyseur beta, sélectionné dans le groupe constitué d'un composé ammonium quaternaire et d'un composé phosphonium quaternaire.

10. Procédé selon la revendication 1, dans lequel le phénol dihydrique de la méthyl hydroquinone ou de l'hydroquinone.

11. Procédé selon la revendication 1, dans lequel la polymérisation est également conduite en présence d'un catalyseur et le phénol dihydrique est représenté par la formule (II) : 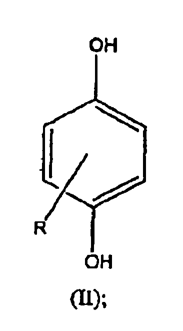 dans laquelle R est un atome d'hydrogène, ou un groupe méthyle.

12. Procédé selon la revendication 11, dans lequel le précurseur de carbonate est un carbonate activé, dans lequel le carbonate activé est un carbonate de diaryle, plus réactif qu'un carbonate de diphényle dans les réactions de transestérification.

13. Procédé selon la revendication 11 ou 12, dans lequel le catalyseur comprend :
a. un catalyseur alpha, sélectionné dans le groupe constitué de sels de métaux alcalins et de sel de métaux alcalino-terreux ; et
b. un catalyseur beta, sélectionné dans le groupe constitué d'un composé ammonium quaternaire et d'un composé phosphonium quaternaire.

14. Procédé selon la revendication 12, dans lequel le carbonate activé comprend du bis(méthylsalicyl)carbonate.
